(19) Europäisches Patentamt
European Patent Office
Office européen des brevets

(11) **EP 1 762 877 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(51) Int Cl.:
*G02B 21/00* (2006.01)   *G02B 21/16* (2006.01)
*G02B 21/08* (2006.01)   *G02B 21/34* (2006.01)

(21) Anmeldenummer: **05019878.7**

(22) Anmeldetag: **13.09.2005**

(54) **Mikroskopieverfahren mit räumlich modulierbarer Beleuchtung**

Microscopy method employing a spatially modulated illumination

Procédé de microscopie employant une modulation spatiale de l'illumination

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**14.03.2007 Patentblatt 2007/11**

(73) Patentinhaber: **Albert-Ludwigs-Universität Freiburg**
**79098 Freiburg (DE)**

(72) Erfinder:
• **Aertsen, Adrianus**
**79102 Freiburg (DE)**
• **Boucsein, Clemens**
**79252 Stegen (DE)**
• **Heck, Detlef**
**Germantown**
**TN 38139 (US)**
• **Nawrot, Martin**
**79111 Freiburg (DE)**
• **Rotter, Stefan**
**79194 Gundelfingen (DE)**

(74) Vertreter: **Keller, Günter et al**
**Lederer & Keller**
**Patentanwälte**
**Prinzregentenstrasse 16**
**80538 München (DE)**

(56) Entgegenhaltungen:
EP-A- 0 911 667          WO-A-97/36166
US-A- 6 133 986          US-A1- 2003 076 571
US-A1- 2003 086 145      US-A1- 2005 036 197
US-B1- 6 261 523

**Beschreibung**

Die Erfindung betrifft das Gebiet der Zellanalytik, genauer den Bereich der Untersuchung der Reaktion und des Verhaltens lebender Zellen, insbesondere Neuronen, wobei gezielte Bestrahlung für die Initiierung einer photochemischen Reaktion zur positionsgenauen Stimulation der Zelle während der Untersuchung eingesetzt wird.

Mit dem erfindungsgemäßen Verfahren können bei einer Probe unabhängig voneinander und zeitlich genau gesteuert einzelne genau definierte Positionen eines zusammenhängenden, größeren Bereichs der Probe bestrahlt werden, wobei die Bestrahlung ausgeschaltet, oder mit verminderter oder voller Intensität eingeschaltet sein kann. Die Proben liegen im mikroskopischen oder submikroskopischen Bereich.

Die Bestrahlung kann zur speziellen Untersuchung von lebenden Zellen, insbesondere durch die Photoaktivierung erregbaren biologischen Materials und Gewebes, wie Nervengewebe oder Herzmuskel, oder bei Fluoreszenzmessverfahren in biologischen Präparaten eingesetzt werden.

Ein indirekter Effekt auf biologisches Material kann bei der durch Bestrahlung gezielt ausgelösten Freisetzung von Wirkstoffen ausgenutzt werden. Hierbei wird insbesondere UV-Licht zu einer photochemischen Reaktion herangezogen, indem zum Beispiel ein Wirkstoffvorläufer spezifisch gespalten wird. Als Produkt wird der gewünschte biologisch aktive Wirkstoff freigesetzt.

So wird beispielsweise die Freisetzung des Neurotransmitters L-Glutamat aus einem biologisch inaktiven Wirkstoffvorläufer durch kurze UV-Lichtpulse, die mittels der Objektivlinse des eingesetzten Lichtmikroskops eingestrahlt werden, von E. M. Callaway und L. C. Katz in Proc. Natl. Acad. Sci. 1993, 90, 7661-7665 offenbart.

Die Einspeisung von UV-Licht zur Freisetzung von L-Glutamat über eine Glasfaser und über einen dichromatischen Spiegel in den Strahlengang eines Lichtmikroskops wird von H. U. Dodt, A. Schierloh, M. Eder und W. Zieglgänsberger in Neuroreport 2003, 14, 623-627 offenbart.

Die Verwendung eines digitalen Mikrospiegelgeräts in dem Strahlengang eines konventionellen Mikroskops zur Verbesserung der Kontrolle über die räumliche Lokalisierung, Menge und Winkel des Beleuchtungslichtes des Mikroskopiervorgangs und zur Sammlung des Lichtes wird von A. L. Dlugan, C. E. MacAulay und P. M. Lane in "Improvements to quantitative microscopy trough the use of digital micromirror devices", Proc. SPIE, 3921, 6-11 offenbart.

Das digitale Mikrospiegelgerät wird im obigen Dokument für den Scanvorgang des Mikroskops anstelle der sonst eingesetzten optischen Bauelemente verwendet. Weder ist ein vom Mikroskopievorgang unabhängiger Einsatz der Bestrahlung vorgesehen, noch sollen verschiedene, unabhängige Positionen der Probe gleichzeitig bestrahlt werden.

Die dynamische Photostimulation zur Freisetzung von L-Glutamat aus einem Wirkstoffvorläufer mittels eines schnellscannenden Laser-Systems wird von C. Boucsein, M. P. Nawrot, S. Rotter, A. Aertsen und D. Heck in J. of Neurophysiology DOI 10.1152/jn. 00245.2005 offenbart.

Bei den obigen Dokumenten bleibt die Bestrahlung der Probe jeweils auf eine Position beschränkt. Es wird keine gleichzeitige Bestrahlung an mehr als an einer Position der Probe, sondern lediglich eine sequenzielle Abfolge von Bestrahlungspositionen ermöglicht. Die sequenzielle Bestrahlung wird durch die verwendete Ablenktechnik für die Bestrahlung der Probe auf maximal etwa 300 Positionen pro Sekunde beschränkt.

Außerdem ist während der Bestrahlungssequenz eine Variation der Strahlungsintensität für die verschiedenen Positionen ebenfalls nicht möglich.

Um jedoch eine ausreichende Wirkung der Strahlung zu erreichen, muss die Bestrahlung an einer Position der Probe für eine bestimmte Zeit bestehen bleiben. Dies limitiert bei den bekannten Verfahren des Standes der Technik die Positionen einer Probe, die insbesondere bezüglich Intensität und Dauer ausreichend Bestrahlung erfahren. Somit ist die Zahl der Positionen, an denen z.B. aus einem Wirkstoffvorläufer eine genügend hohe Konzentration eines Wirkstoffes freigesetzt werden kann, begrenzt.

Die vorliegende Erfindung betrifft Verfahren zur Bestrahlung einer Probe, die durch ein Nachweis- oder Messsystem untersucht werden kann, wobei mehrere frei wählbare Positionen der Probe unabhängig voneinander gleichzeitig bestrahlt oder nicht bestrahlt werden können, wobei die Strahlung vor dem Auftreffen auf die Probe an einem digitalen Mikrospiegelgerät reflektiert wird, das so in dem Strahlengang angeordnet ist, dass je nach Schaltzustand jedes einzelnen Mikrospiegels des digitalen Mikrospiegelgeräts der Teil der Strahlung, der auf den Mikrospiegel trifft, jeweils eine Position der Probe bestrahlt oder diese verfehlt. Die Positionen der Probe können benachbart sein.

Als Probe werden bei einer Ausführung der vorliegenden Erfindung Mikroskopieproben verwendet. Bevorzugt sind Dünnschnitte, insbesondere Dünnschnitte biologischen Materials, wie Gewebedünnschnitte. Als Gewebe sind jede Art menschlichen und tierischen Gewebes verwendbar, bevorzugt sind tierisches Nerven- und Hirngewebe, insbesondere "akute Hirnschnitte". Unter "akuten Hirnschnitten" werden Schnitte biologischen aktiven Hirngewebes verstanden. Weitere im Rahmen dieser Anmeldung bevorzugte Proben sind Zellen und Zellkulturen. Hierfür werden bevorzugt Probenträger verwendet, die zur Aufnahme einer flüssigen Probe geeignet sind und Vorrichtungen zum kontinuierlichen Flüssigkeitswechsel aufweisen können.

Zur Bestrahlung wird bei dieser Ausführung der vorliegenden Erfindung UV-Licht, insbesondere UV-Licht von 400 bis 200 nm Wellenlänge verwendet. Die Wellenlänge kann so gewählt sein, dass die für eine Photoreaktion benötigte Energie von dem Licht zur Verfügung gestellt wird.

Die Strahlenquelle der Bestrahlung kann kontinuierlich als breitbandige thermische Lichtquelle oder als Laser, insbesondere Festfrequenzlaser, kontinuierlich oder gepulst ausgeführt sein. Bevorzugt ist eine kontinuierliche in der Frequenz ausgewählt eingeschränkte UV-Strahlenquelle, wie eine Quecksilberdampflampe in Normaldruck oder Hochdruckausführung.

Unter "Strahlengang der Bestrahlung der Probe" wird der Weg der Strahlung von der Strahlenquelle über optische Bauteile, einschließlich des digitalen Mikrospiegelgeräts, bis zum Auftreffen auf die Probe verstanden.

Unter "Position der Probe" wird ein räumlich begrenzter Bereich der Probe verstanden, insbesondere der räumlich begrenzte Bereich, der durch die reflektierte Strahlung eines einzelnen Mikrospiegels erreicht werden kann.

Unter "Wirkstoffvorläufer" wird eine biologisch inaktive, chemische Substanz oder Zusammensetzung verstanden, die durch eine geeignete Maßnahme in eine biologisch aktive, chemische Substanz oder Zusammensetzung überführt werden kann. Vorzugsweise werden hierunter im Rahmen der vorliegenden Erfindung photochemisch aktivierbare oder spaltbare biologisch inaktive Substanzen verstanden, die durch geeignete Bestrahlung, vorzugsweise UV-Licht, in eine biologisch aktive Substanz oder Zusammensetzung überführt werden. Beispielsweise wird als Wirkstoffvorläufer im Rahmen der vorliegenden Erfindung inaktiviertes oder "caged" Glutamat wie L-Glutaminsäure γ-(α-carboxy-2-nitrobenzyl)-ester, als γ-CNB-caged-L-Glutaminsäure oder CNB-Glutamat bezeichnet, oder N-(6-bromo-7-hydroxycumarin-4-ethyl-methoxycarbonyl)-L-Glutamat, als BHC-Glutamat bezeichnet, oder 4-Methoxy-7-nitroindolinyl-Glutamat, als MNI-Glutamat bezeichnet, verwendet, der über Bestrahlung mit UV-Licht in freies L-Glutamat überführt werden kann. Ebenso können auch geeignete andere Vorläufermoleküle eingesetzt werden, die durch Licht geeigneter Wellenlänge gezielt in entsprechende Produkte gespalten werden können.

Unter "dynamischer Lichtstimulation" bzw. "dynamischer Photostimulation" wird die direkte oder indirekte Auslösung einer Reaktion in einem Gewebe, vorzugsweise Nervengewebe durch Bestrahlung verstanden. Insbesondere ist die direkte Stimulation von Nerven- und anderen erregbaren Geweben, z.B. Herzmuskelgewebe, durch Aktivierung von Ionenkanälen beispielsweise in gentechnisch veränderten Tieren oder die direkte Lichtaktivierung von Nervenzellen oder die indirekte Stimulation durch Bestrahlung ausgelöste Freisetzung eines biologisch aktiven Wirkstoffs aus einem Wirkstoffvorläufer umfasst. Gemäß der vorliegenden Erfindung ist die Freisetzung des L-Glutamats aus einem Wirkstoffvorläufer durch Bestrahlung mit UV-Licht, insbesondere zur Erregung von Nervenzellen, am meisten bevorzugt.

Das Nachweis- oder Messsystem umfaßt im Rahmen der vorliegenden Erfindung jegliche Lichtmikroskopie, insbesondere Lichtmikroskope mit einem Vergrößerungsbereich von 2,5 bis 40-fach. Es ist aber auch durchaus möglich, mit höherer Vergrößerung, etwa 1000-fach, zu arbeiten.

In einer besonders bevorzugten Ausführungsform der vorliegenden Erfindung wird ein aufrechtes, invertiertes Lichtmikroskop verwendet.

Das Nachweis- oder Messsystem umfasst neben der Lichtmikroskopie weitere Messelektroden, insbesondere Patch-Clamp-Elektroden, z.B. zur Messung der Membranleitfähigkeit oder des Membranpotentials.

Unter "Strahlengang des Nachweis- oder Messsystems" wird der Weg der elektromagnetischen Strahlung, die bei der Mikroskopie bzw. Spektroskopie eingesetzt wird, von der eventuell vorhandenen Strahlenquelle des Nachweis- oder Messsystems über optische Bauteile und über bzw. durch die Probe zum entsprechend verwendeten Detektor verstanden.

Unter "digitalen Mikrospiegelgerät" wird ein digitaler Spiegelchip (digital mirror device, DMD) wie beispielsweise von Texas Instruments Inc. vertrieben, verstanden. Diese kommerziell verfügbaren Chips, die für die Videoprojektion optimiert worden sind, werden über Dünnschichttechnologie hergestellt. Sie tragen eine Vielzahl kleiner, etwa quadratischer Spiegelelemente, die in Reihen und Spalten angeordnet sind, typischerweise mit einer XGA-(Extended Graphics Array)-Auflösung von 1024 x 768 Spiegelelementen. Bevorzugt sind etwa 1000 Reihen und etwa 800 Spalten, oder mehr, wobei die Kantenlänge jedes Spiegelelements bevorzugt etwa 12 $\mu$m beträgt. Die einzelnen Spiegelelemente können zwischen zwei verschiedenen Kippwinkeln unabhängig voneinander umgeschaltet werden. Diese Umschaltung zwischen den Kippzuständen ist innerhalb eines Zeitraumes von etwa 20 $\mu$m oder schneller durchführbar. Es können aber auch solche Mikrospiegelgeräte eingesetzt werden, die mehrere Spiegelelemente aufweisen und schneller reagieren können.

In einer bevorzugten Ausführungsform der vorliegenden Erfindung wird das digitale Mikrospiegelgerät so angeordnet, dass ein Lichtstrahl, der auf einen Mikrospiegel des digitalen Mikrospiegelgeräts fällt, in zwei bestimmbare Richtungen reflektiert wird, vorzugsweise bei einem Kippwinkel auf die Probe, bei dem anderen auf einen Absorber.

Durch die Möglichkeit der unabhängigen Schaltung jeweils einzelner Mikrospiegel des digitalen Mikrospiegelgeräts kann ein gegebenes Muster in ein Bestrahlungsmuster übertragen werden, das auf die Probe projiziert werden kann.

Unter "Muster" wird die Information geeigneter Art, insbesondere digital, verstanden, die zu jedem einzelnen Mikrospiegel des digitalen Mikrospiegelgeräts den individuellen Schaltzustand angibt.

Unter "Bestrahlungsmuster" wird die einem Muster entsprechende Bestrahlung der Probe verstanden.

Bei einer Ausführungsform der vorliegenden Erfindung wird die Strahlung vor dem Auftreffen auf die Probe an dem digitalen Mikrospiegelgerät reflektiert, wobei diese so angeordnet ist, dass sie je nach Schaltzustand jedes einzelnen Mikrospiegels des digitalen Mikrospiegelgeräts der Teil der Bestrahlung, die auf den Mikrospiegel trifft, jeweils eine Position der Probe bestrahlt oder diese verfehlt.

Auf diese Weise kann realisiert werden, dass ein gegebenes Muster in ein entsprechendes Bestrahlungsmuster der Probe überführt werden kann. Erfindungsgemäß wird eine gleichzeitige Bestrahlung der Probe an mehreren voneinander unabhängigen Positionen ermöglicht. Das digitale Mikrospiegelgerät wird über geeignete Steuerungseinrichtungen, die über zugehörige Computerprogramme gesteuert werden, geregelt.

Bei einer Ausführungsform der vorliegenden Erfindung trifft das Licht auf der dem Nachweis- oder Messsystem, insbesondere dem Lichtmikroskop, abgewandten Seite auf die Probe, z.B. bei einem aufrechten invertierten Lichtmikroskop durch die Bodenplatte des Probenhalters. Hierdurch wird ein Abschatten des Bestrahlungsbereichs durch eventuell vorhandene Objekte wie Messelektroden vermieden. Außerdem kann durch die Nähe der Probe, insbesondere der Zellen und Zellkulturen, zur Bodenplatte des Probenhalters ein besseres Fokussieren der Bestrahlung verwirklicht werden. Weiterhin ist der Strahlengang der Bestrahlung durch die Pufferlösung vor dem Auftreffen auf der Probe geringer, wodurch ungewollte Nebenreaktionen vermieden werden und/oder im Fall der indirekten Stimulation durch Wirkstoffvorläufer ein ungewolltes Freisetzen des Wirkstoffs reduziert wird.

Unter "Bestrahlungsbereich" wird der Bereich der Probe verstanden, der von der Strahlung, die über das digitale Mikrospiegelgerät reflektiert wird, erreicht wird.

Der maximal mögliche Bestrahlungsbereich, der erreicht wird, wenn alle Mikrospiegel zur Beleuchtung der Probe ausgerichtet sind, kann den ganzen Probenbereich umfassen. In einer bevorzugten Ausführungsform der vorliegenden Erfindung wird aber nur ein Teil der Probe bestrahlt, in dem das Reflektionslicht des digitalen Mikrospiegelgeräts, das für die Probe bestimmt ist, über eine optische Anordnung auf einen Teil der Probe fokussiert wird.

In einer weiteren bevorzugten Ausführungsform der vorliegenden Erfindung wird die Bestrahlungsintensität einer Position der Probe reguliert, indem mehrere benachbarte Spiegelelemente zu einem gemeinsamen Bestrahlungsbereich kombiniert werden, wodurch die effektive Strahlungsintensität an dieser Position der Probe erhöht wird.

In einer weiteren bevorzugten Ausführungsform der vorliegenden Erfindung wird die Bestrahlungsintensität einer Position der Probe reduziert, indem das entsprechende Spiegelelement gezielt an- und abgeschaltet wird.

Für den Fall, dass der Mikrospiegel konstant bei dem Kippwinkel steht, sodass seine Reflektion der Bestrahlung die Probe trifft, ist die Intensität der Bestrahlung an dieser Position maximal. Wird der Kippwinkel durch gezieltes An- und Abschalten zeitlich variiert, so ergibt sich die effektive Intensität der Bestrahlung an der entsprechenden Probenposition während eines Zeitintervalls aus der Formel:

$$I_{Eff} = I_0 \times (S_P / S_0),$$

wobei $I_{Eff}$ = effektive Intensität, $I_0$ = Intensität bei dauerhafter Stellung des Mikrospiegels, so dass die reflektierte Bestrahlung die Probe trifft, $S_P$ = Zeit, in der der Mikrospiegel im Zeitintervall $S_0$ bei dem Kippwinkel verbleibt, bei dem die reflektierte Bestrahlung die Probe trifft.

Nach einer erfindungsgemäßen Ausführung werden für den Fall, dass $I_{Eff} < I_0$ sein soll, hochfrequente Kippwinkeländerungen der Mikrospiegel des digitalen Mikrospiegelgeräts von 1 Hz bis 100 kHz, vorzugsweise 10 Hz bis 10 kHz, zum Beispiel 100 bis 1000 Hz, vollzogen.

In einer bevorzugten Ausführungsform der vorliegenden Erfindung ist der Strahlengang der Bestrahlung der Probe unabhängig vom Strahlengang des Nachweis- oder Messsystems, soweit dieses eine Mikroskopie- oder eine Spektroskopievorrichtung umfasst. Durch geeignete Vorrichtungen können die beiden Strahlengänge unabhängig voneinander nachgewiesen werden. So können die Proben einerseits beispielsweise über das Lichtmikroskop beobachtet werden und andererseits kann beispielsweise die Fluoreszenz mit einer anderen Wellenlänge beobachtet werden. Beide Strahlengänge können anschließend wieder über geeignete Vorrichtungen miteinander zur Deckung gebracht werden.

In einer bevorzugten Ausführungsform der vorliegenden Erfindung wird das Bestrahlungsmuster, das durch das digitale Mikrospiegelgerät erzeugt wird, zeitlich variiert, bevorzugt mit 0,1 Hz bis 10 kHz, insbesondere mit 0,1 Hz bis 1 kHz, z.B. wird das Bestrahlungsmuster einmal pro Sekunde geändert. Die Erfindung ermöglicht die gleichzeitige Bestrahlung einer Probe an mehreren unabhängigen Positionen mit schnell veränderlichen raumzeitlichen Mustern.

In einer weiteren Ausführungsform der vorliegenden Erfindung umfasst der Strahlengang der Bestrahlung der Probe ein optisches Bauteil, vorzugsweise eine Blende, das geeignet ist, die Bestrahlung des digitalen Mikrospiegelgeräts komplett zu unterbinden.

Gemäß der vorliegenden Erfindung soll die Bestrahlung der Probe nicht zum Mikroskopievorgang des Nachweis- oder Messsystems eingesetzt werden, wie in einem konfokalen Lichtmikroskop.

In einer weiteren bevorzugten Ausführungsform der Erfindung ist der Probenträger zur Aufnahme einer flüssigen Probe geeignet, wobei die flüssige Probe vorzugsweise biologisches Material, mehr bevorzugt Zellen oder Zellkulturen, am bevorzugtesten Neuronen umfasst.

In einer weiteren bevorzugten Ausführungsform der vorliegenden Erfindung wird das Bestrahlungsmuster mit einer Auslösung von besser als 50 μm, bevorzugt 20 μm oder besser auf die Probe abgebildet. Dies bedeutet, dass die nebeneinander angeordneten Positionen auf der Probe, die bestrahlt bzw. nicht bestrahlt werden, nur 50 μm, bevorzugt 20 μm und noch bevorzugter nur 1 μm voneinander entfernt sind.

In einer besonderen Ausführungsform sind die Positionen der Probe benachbart, z.B. unmittelbar nebeneinander angeordnet. Dies kann für die in der vorliegenden Anmeldung beschriebenen Vorrichtungen, Verfahren und/oder Verwendungen gelten.

In einer weiteren bevorzugten Ausführungsform der vorliegenden Erfindung wird die Bestrahlung der Probe mit UV-Licht vorgenommen, das zur Spaltung eines Wirkstoffvorläufers, insbesondere "caged" L-Glutamat, verwendet wird.

In dieser erfindungsgemäßen Ausführung wird es möglich, an biologischen Proben, insbesondere Neuronen, räumlich und zeitlich hoch aufgelöste dynamische Photostimulation durchzuführen. Insbesondere kann die Probe gleichzeitig an mehreren unabhängigen Positionen bestrahlt werden und eine zeitliche Abfolge verschiedener Bestrahlungsmuster mit unterschiedlichen, unabhängigen Positionen eingesetzt werden. Diese Bestrahlung wird insbesondere zur dynamischen Photostimulation unter Verwendung eines Wirkstoffvorläufers durchgeführt. Durch den Einsatz von spezifischen Bestrahlungsmustern kann insbesondere in einem intakten Netzwerk von Nervenzellen (akuter Hirnschnitt oder Nervenzellkultur) definierte und raumzeitlich kontrollierte Stimulationsmuster erzeugt werden, wie sie nach dem Stand der Technik nicht möglich waren.

In einer weiteren Ausführungsform der vorliegenden Erfindung kann die Bestrahlung einer Probe bei Fluoreszenzmessungen, insbesondere an biologischem Material, eingesetzt werden. So können Fluoreszenzmessungen die Messungen intrazellulärer Kalziumkonzentrationen oder Membranspannungsänderungen, insbesondere von Neuronenpopulationen umfassen.

Ein Vorteil der vorliegenden Erfindung bei der Durchführung von Fluoreszenzmessungen ist eine Verringerung des Bleicheffektes, insbesondere bei großflächigen Proben wie Zellen oder Zellkulturen, da die Bestrahlung zur Anregung der Fluoreszenz auf das zu messende Teilstück der Probe für die Dauer der Messung beschränkt werden kann.

Die vorliegende Erfindung betrifft ein Verfahren der Bestrahlung einer Probe, die durch einen Nachweis oder ein Messsystem untersucht werden kann, wobei mehrere frei wählbare, gegebenenfalls benachbarte Positionen der Probe unabhängig voneinander gleichzeitig bestrahlt oder nicht bestrahlt werden können, wobei die Strahlung vor dem Auftreffen auf die Probe an einem digitalen Mikrospiegelgerät reflektiert wird, das so in dem Strahlengang angeordnet ist, dass je nach Schaltzustand jedes einzelnen Mikrospiegels des digitalen Mikrospiegelgeräts der Teil der Strahlung, der auf den Mikrospiegel trifft, jeweils eine Position der Probe bestrahlt oder diese verfehlt.

Bei dem erfindungsgemäßen Verfahren zur Bestrahlung einer Probe, ist der Strahlengang der Bestrahlung der Probe unabhängig von dem Strahlengang des Nachweis- oder Messsystems.

Ein weiterer Aspekt der vorliegenden Erfindung betrifft ein Verfahren zur Bestrahlung einer Probe, wobei durch den Probenträger, der zur Aufnahme einer flüssigen Probe, insbesondere Zellen oder Zellkulturen geeignet ist, Flüssigkeit gepumpt wird.

Ein weiterer Aspekt der vorliegenden Erfindung betrifft ein Verfahren zur Bestrahlung einer Probe, bei dem die Intensitäten der Bestrahlung einzelner gegebenenfalls benachbarter Positionen der Probe unabhängig voneinander gewählt werden können, indem die Intensität der Bestrahlung durch schnelles Wechseln der Schaltzustände der entsprechenden Mikrospiegel reduziert wird.

Ein weiterer Aspekt der vorliegenden Erfindung betrifft ein Verfahren zur Bestrahlung einer Probe, wobei UV-Licht der Wellenlänge von 200 bis 400 nm zur Spaltung eines Wirkstoffvorläufers, insbesondere "caged" L-Glutamat, verwendet wird.

Die vorliegende Erfindung betrifft weiter die Verwendung eines digitalen Mikrospiegelgeräts zur Bestrahlung einer Probe, wobei mehrere Positionen der Probe unabhängig voneinander gleichzeitig bestrahlt oder nicht bestrahlt werden können, und wobei das digitale Mikrospiegelgerät so angeordnet ist, dass je nach Schaltzustand jedes einzelnen Mikrospiegels des digitalen Mikrospiegelgeräts der Teil der Strahlung der auf den Mikrospiegel trifft, jeweils eine Position der Probe bestrahlt oder diese verfehlt.

Weiter betrifft die vorliegende Erfindung die Verwendung eines digitalen Mikrospiegelgeräts zur Bestrahlung einer Probe, die durch ein Nachweis- oder Messsystem untersucht wird oder zur Untersuchung vorgesehen ist.

Weiter betrifft die vorliegende Erfindung die Verwendung eines digitalen Mikrospiegelgeräts zur Bestrahlung einer Probe, wobei der Strahlengang der Bestrahlung der Probe unabhängig von dem Strahlengang des Nachweis- oder Messsystems ist.

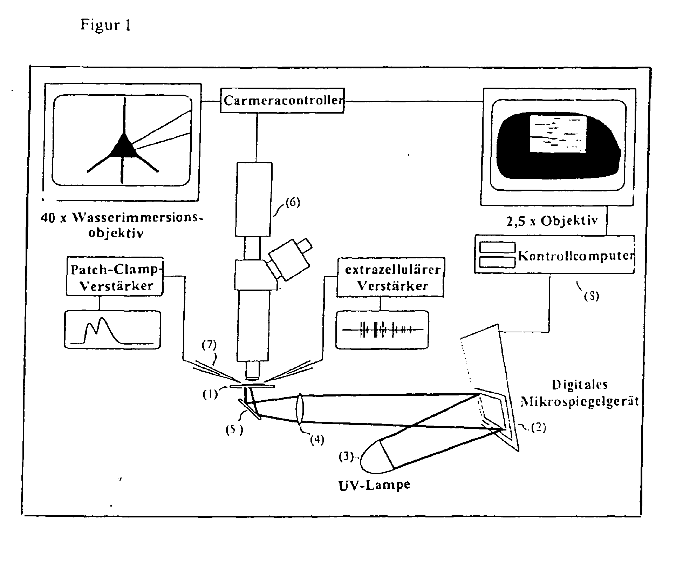

Eine technische Ausführungsform der vorliegenden Erfindung wird in Figur 1 näher erläutert.

In einem aufrechten Lichtmikroskop (6) wird die Probe (1) durch eine UV-Lampe (3), deren Strahlung an einem digitalen Mikrospiegelgerät (2) reflektiert wird, bestrahlt. Die reflektierte Strahlung wird in dieser Ausführung von der Unterseite über Fokussierung mittels Linsen (4) und Spiegel (5) an die Probe geführt. Durch das digitale Mikrospiegelgerät kann nach einem über einen Kontrollcomputer (8) gewählten Bestrahlungsmuster die Probe (1) an mehreren benachbarten Positionen unabhängig voneinander gleichzeitig bestrahlt werden. Neben der Bestrahlung und der Lichtmikroskopie sind weitere Untersuchungsmöglichkeiten wie Patch-Clamp-Elektroden (7) vorgesehen. Die Strahlung gelangt durch das Okular des Lichtmikroskops (6) auf eine Vorrichtung (beispielsweise Carmeracontroller), wodurch die Bestrahlung wieder aufgespalten werden kann, nämlich einerseits zum Kontrollcomputer und andererseits zur Beobachtung der Probe.

Dieser Aufbau ist zur Untersuchung von Zellen und Zellkulturen, insbesondere Neuronen, über dynamische Photostimulation geeignet. Insbesondere ist über gewählte Bestrahlungsmuster und der entsprechenden durch die Bestrahlung initiierten Freisetzung eines Wirkstoffes, insbesondere eines Neurotransmitters wie L-Glutamat, die Untersuchung einzelner Neuronen möglich, die mit einem Stimulationsmuster angeregt werden, bei dem mehrere unabhängige Positionen gleichzeitig gewählt werden können.

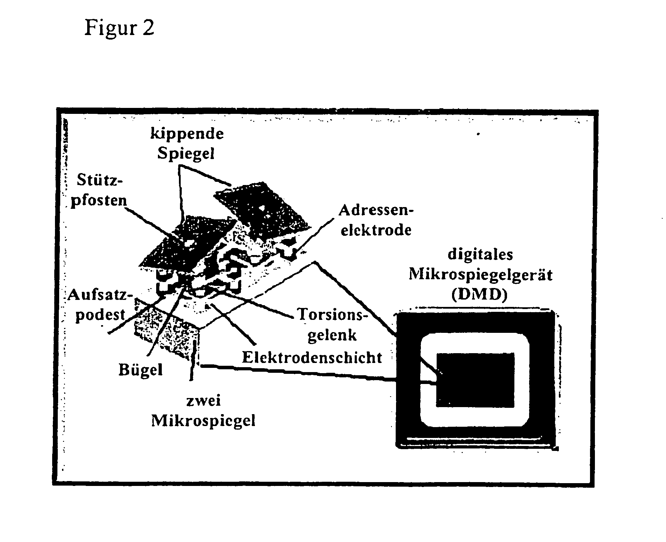

Figur 2 zeigt die technische Ausführung eines bevorzugten verwendeten digitalen Mikrospiegelgeräts anhand eines Aufbauschemas. Die einzelnen Spiegel werden durch elektronische Impulse bewegt.

**Patentansprüche**

1. Verfahren zur Bestrahlung einer Probe mit dynamischer Photostimulation zur Erzeugung von definierten und raum-zeitlich kontrollierten Stimulationsmustern und zur Untersuchung durch ein Nachweis- oder Messsystem,
das neben einem Lichtmikroskop weitere Messelektroden zur Messung der Membranleitfähigkeit oder des Membranpotentials umfasst,
wobei die Bestrahlung durch eine Quelle von UV-Licht bewirkt wird, und bei dem das UV-Licht auf der dem Nachweis- oder Meßsystem abgewandten Seite auf die Probe trifft und
der Strahlengang der Bestrahlung der Probe nicht zum Mikroskopievorgang eingesetzt wird,
und die Strahlung vor dem Auftreffen auf die Probe an einem digitalen Mikrospiegelgerät mit einer Vielzahl von Spiegelelementen reflektiert wird, das so in dem Strahlengang angeordnet ist,
dass je nach Schaltzustand jedes einzelnen Spiegelelements des digitalen Mikrospiegelgeräts der Teil der Strahlung, der auf das Spiegelelement trifft, jeweils eine Position der Probe bestrahlt oder diese verfehlt,
wodurch mehrere Positionen der Probe unabhängig voneinander gleichzeitig bestrahlt oder nicht bestrahlt werden können,
wobei die gezielte Bestrahlung für die Initiierung einer photochemischen Reaktion zur positionsgenauen Stimulation der Zelle während der Untersuchung eingesetzt wird und wobei eine photochemisch aktivierbare oder spaltbare biologisch inaktive Substanz in eine biologisch aktive Substanz oder Zusammensetzung überführt wird.

2. Verfahren nach Anspruch 1, **dadurch gekennzeichnet, dass** durch den Probenträger, der zur Aufnahme einer flüssigen Probe geeignet ist, Flüssigkeit gepumpt wird.

3. Verfahren nach Anspruch 1 oder 2, **dadurch gekennzeichnet, dass** die Intensitäten der Bestrahlung einzelner Positionen der Probe unabhängig voneinander gewählt werden können, indem die Intensität durch schnelles Wechseln der Schaltzustände der entsprechenden Mikrospiegel reduziert wird.

4. Verfahren nach Anspruch 1-3, **dadurch gekennzeichnet, dass** das UV-Licht der Wellenlänge von 200 - 400 nm verwendet wird.

5. Verwendung einer Vorrichtung, die neben einem Lichtmikroskop weitere Messelektroden zur Messung der Membranleitfähigkeit oder des Membranpotentials umfasst, bei der

a) die Bestrahlung durch eine Quelle von UV-Licht bewirkt wird und das UV-Licht auf der dem Nachweis- oder Messsystem abgewandten Seite auf die Probe trifft
b) der Strahlengang der Bestrahlung der Probe nicht zum Mikroskopievorgang eingesetzt wird
c) die Strahlung vor dem Auftreffen auf die Probe an einem digitalen Mikrospiegelgerät mit einer Vielzahl von Spiegelelementen reflektiert wird, das so in dem Strahlengang angeordnet ist, dass je nach Schaltzustand jedes einzelnen Spiegelelements des digitalen Mikrospiegelgeräts der Teil der Strahlung, der auf den Mikrospiegel trifft, jeweils einen Teil der Probe bestrahlt, oder diesen verfehlt, wodurch mehrere Positionen der Probe unabhängig voneinander gleichzeitig bestrahlt oder nicht bestrahlt werden können,
d) wodurch die gezielte Bestrahlung für die Initiierung einer photochemischen Reaktion zur positionsgenauen Stimulation während der Untersuchung eingesetzt wird, wobei eine photochemisch aktivierbare oder spaltbare biologisch inaktive Substanz in eine biologisch aktive Substanz oder Zusammensetzung überführt wird

zur dynamischen Photostimulation einer Probe zur Erzeugung von definierten und raum-zeitlich kontrollierten Stimulationsmustern und Untersuchung durch ein Nachweis- oder Messsystem.

6. Verwendung nach Anspruch 5, **dadurch gekennzeichnet, dass** das Nachweis- oder Messsystem Patch-Clamp-Elektroden, umfasst.

**7.** Verwendung nach einem der Ansprüche 5 oder 6, **dadurch gekennzeichnet, dass** der Probenträger zur Aufnahme von flüssigen Proben geeignet ist.

**8.** Verwendung nach Anspruch 7, **dadurch gekennzeichnet, dass** der Probenträger für flüssige Proben enthaltend biologisches Material, insbesondere Zellen oder Zellkulturen geeignet ist.


**Claims**

**1.** Method for irradiation of a sample with dynamic photostimulation for the generation of defined and spatiotemporal controlled stimulation patterns and for the examination by means of a detection or measurement system;

comprising in addition to a light microscope further measuring electrodes for measuring the membrane conductance or the membrane potential;

wherein the irradiation is effected by a source of ultraviolet light and wherein the ultraviolet light impinges on the sample at the side facing away from the detection or measurement system and

the path of rays of the irradiation of the sample is not employed for the microscopic operation;

and the radiation is reflected before impinging on the sample at a digital micro mirror device with a large number of mirror elements which is arranged in the path of rays

such that in accordance to the switching status of each single mirror element of the digital micro mirror device the part of radiation impinging on the mirror element irradiates or misses at least one position of the sample

whereby several positions of the sample independently of each other may be irradiated simultaneously or not,

wherein the selective irradiation is employed for the initiation of a photo-chemical reaction for the exactly positioned stimulation of the cell during the examination and wherein a photo-chemically activable or cleavable biologically inactive substance is transferred into a biologically active substance or composition.

**2.** The method according to claim 1 **characterized in that** a liquid is pumped through the sample holder which is suitable to absorb a liquid sample.

**3.** The method according to claim 1 or 2 **characterized in that** the intensities of the irradiation of single positions of the sample can be selected independently of each other by reducing the intensity by rapid changing of the switching states of the corresponding micro mirror.

**4.** The method according to claim 1-3 **characterized in that** ultraviolet light having a wavelength from 200 - 400 nm is used.

**5.** The use of a device comprising in addition to a light microscope further measuring electrodes for measuring the membrane conductance or the membrane potential; wherein

a) the irradiation is effected by a source of ultraviolet light and wherein the ultraviolet light impinges on the sample at the side facing away from the detection or measurement system;
b) the path of rays of the irradiation of the sample is not employed for the microscopic operation;
c) the radiation is reflected before impinging on the sample at a digital micro mirror device with a large number of mirror elements which is arranged in the path of rays such that in accordance to the switching status of each single mirror element of the digital micro mirror device the part of radiation impinging on the micro mirror irradiates or misses at least one position of the sample whereby several positions of the sample independently of each other may be irradiated simultaneously or not,
d) wherein the selective irradiation is employed for the initiation of a photo-chemical reaction for the exactly positioned stimulation of the cell during the examination and wherein a photo-chemically activable or cleavable biologically inactive substance is transferred into a biologically active substance or composition

for the dynamic photostimulation of a sample for the generation of defined and spatiotemporal controlled stimulation patterns and for the examination by means of a detection or measurement system.

**6.** The use according to claim 5 **characterized in that** the detection or measurement system comprises patch clamp electrodes.

**7.** The use according to any one of claims 5 or 6 **characterized in that** the sample holder is suitable for absorbing liquid samples.

**8.** The use according to claim 7 **characterized in that** the sample holder is suitable for liquid samples containing biological material, in particular cells or cell cultures.


**Revendications**

**1.** Procédé d'exposition d'un échantillon à une photostimulation dynamique pour générer des profils de stimulation définis et contrôlés dans l'espace-temps et d'examen par un système de détection ou de mesure,

qui comprend, outre un microscope optique, d'autres électrodes de mesure pour mesurer la conductivité ou le potentiel d'une membrane,

dans lequel l'exposition est assurée par une source de lumière UV et la lumière UV s'applique sur l'échantillon du côté opposé au système de détection ou de mesure et

le trajet des rayons d'exposition de l'échantillon n'est pas employé pour l'examen au microscope,

et, avant d'atteindre l'échantillon, le rayonnement est réfléchi sur une matrice à micromiroirs ayant une pluralité d'éléments de miroir, qui est aménagée dans le trajet des rayons de sorte que,

en fonction de l'état de commutation de chaque élément de miroir individuel de la matrice à micromiroirs, la partie du rayonnement, qui atteint l'élément de miroir, expose au rayonnement respectivement une position de l'échantillon ou la manque,

ce qui permet de pouvoir exposer simultanément au rayonnement plusieurs positions de l'échantillon indépendamment l'une de l'autre ou non,

dans lequel l'exposition ciblée est utilisée pour l'initiation d'une réaction photochimique destinée à la stimulation d'une position précise de la cellule pendant l'examen et une substance biologiquement inactive photochimiquement activable ou dissociable est transformée en une substance ou une composition biologiquement active.

2. Procédé selon la revendication 1, **caractérisé en ce qu'**un liquide est pompé par le porte-échantillon, qui convient à l'absorption d'un échantillon liquide.

3. Procédé selon la revendication 1 ou 2, **caractérisé en ce que** les intensités d'exposition de positions individuelles de l'échantillon peuvent être choisies indépendamment l'une de l'autre en réduisant l'intensité par un changement rapide des états de commutation des micromiroirs correspondants.

4. Procédé selon les revendications 1 à 3, **caractérisé en ce que** l'on utilise de la lumière UV de longueur d'onde de 200 à 400 nm.

5. Utilisation d'un dispositif qui comprend, outre un microscope optique, d'autres électrodes de mesure pour mesurer la conductivité ou le potentiel de la membrane, dans laquelle :

   a) l'exposition est assurée par une source de lumière UV et la lumière UV s'applique sur l'échantillon du côté opposé au système de détection ou de mesure,
   b) le trajet des rayons d'exposition de l'échantillon n'est pas employé pour l'examen au microscopie,

c) avant d'atteindre l'échantillon, le rayonnement est réfléchi sur une matrice à micromiroirs ayant une pluralité d'éléments de miroir, qui est aménagée dans le trajet des rayons de sorte qu'en fonction de l'état de commutation de chaque élément de miroir individuel de la matrice à micromiroirs, la partie du rayonnement, qui atteint l'élément de miroir, expose au rayonnement respectivement une position de l'échantillon ou la manque, ce qui permet de pouvoir exposer simultanément au rayonnement plusieurs positions de l'échantillon indépendamment l'une de l'autre ou non,
d) si bien que l'exposition ciblée est utilisée pour l'initiation d'une réaction photochimique destinée à la stimulation d'une position précise pendant l'examen, dans laquelle une substance biologiquement inactive photochimiquement activable ou dissociable est transformée en une substance ou une composition biologiquement active,

pour la photostimulation dynamique d'un échantillon dans le but de générer des profils de stimulation définis et contrôlés dans l'espace-temps et son examen par un système de détection ou de mesure.

6. Utilisation selon la revendication 5, **caractérisée en ce que** le système de détection ou de mesure comprend des électrodes de type patch-clamp.

7. Utilisation selon l'une quelconque des revendications 5 ou 6, **caractérisée en ce que** le porte-échantillon convient à l'absorption d'échantillons liquides.

8. Utilisation selon la revendication 7, **caractérisée en ce que** le porte-échantillon convient à des échantillons liquides contenant un matériau biologique, en particulier des cellules ou des cultures cellulaires.

Figur 1

40 x Wasserimmersionsobjektiv

Carmeracontroller

2,5 x Objektiv

Patch-Clamp-
Verstärker

extrazellulärer
Verstärker

Kontrollcomputer

(S)

(6)

(7)

(1)

(5)

(4)

(3)

UV-Lampe

Digitales
Mikrospiegelgerät

(2)

Figur 2

**IN DER BESCHREIBUNG AUFGEFÜHRTE DOKUMENTE**

**In der Beschreibung aufgeführte Nicht-Patentliteratur**

- **E. M. CALLAWAY ; L. C. KATZ.** *Proc. Natl. Acad. Sci.,* 1993, vol. 90, 7661-7665
- **H. U. DODT ; A. SCHIERLOH ; M. EDER ; W. ZIEGLGÄNSBERGER.** *Neuroreport,* 2003, vol. 14, 623-627
- **A. L. DLUGAN ; C. E. MACAULAY ; P. M. LANE.** Improvements to quantitative microscopy trough the use of digital micromirror devices. *Proc. SPIE,* vol. 3921, 6-11
- **C. BOUCSEIN ; M. P. NAWROT ; S. ROTTER ; A. AERTSEN ; D. HECK.** *J. of Neurophysiology DOI 10.1152/jn.00245.2005*